Europäisches Patentamt

European Patent Office

Office européen des brevets

(19)

(11) Publication number: **0 000 426**
A1

(12)
# EUROPEAN PATENT APPLICATION

(21) Application number: 78300090.4

(22) Date of filing: 27.06.78

(51) Int. Cl.²: **C08F246/00, C08F220/04, C08F220/34**

(30) Priority: 27.06.77 AU 576/77

(71) Applicant: THE UNIVERSITY OF MELBOURNE, Grattan Street, Parkville Victoria (AU)

(72) Inventor: James, Robert Owen, 338 Blaxland Road, Ryde NSW (AU)
Homola, Andrew Marian, 5600 Cottle Road, San José California (US)

(43) Date of publication of application: 24.01.79 Bulletin 79/2

(74) Representative: Hartley, David et al, c/o Withers & Rogers 4 Dyer's Buildings Holborn, London, EC1N 2JT (GB)

(84) Designated Contracting States: DE FR GB

(54) Amphoteric latices and process for their preparation.

(57) Amphoteric latices formed by co-polymerising monomeric polymerisable compounds including a base monomer, a monomer including an amine group and a monomer including a carboxyl group by the use of a polymerisation catalyst, the latices having ionisable amine and carboxyl groups on their surfaces and displaying the characteristic that their surface charge is dependant on pH and can vary from positive to negative.

EP 0 000 426 A1

ACTORUM AG

1

## PREPARATION AND CHARACTERISATION OF AMPHOTERIC LATICES

This invention relates to improved latices and more particularly to improved synthetic latices which show amphoteric properties. There have previously been proposed various synthetic latices which are produced by polymerisation of monomers such as styrene, butadiene, methyl methacrylate, ethyl acrylate, vinyl acetate, vinyl chloride, vinylidene chloride and certain mixtures of these monomers.

Conventionally, latices have been formed in one of two ways. These are that the stabilisation is due to electrostatic repulsion between surfaces with adsorbent surfactants and/or due to steric replusion (steric stabilisation) due to the presence of polymer chains with or without fixation or anchoring moietes at the latex surfaces.

Sterically stabilised latices may also have functional groups as part of or attached to the particles which groups are normally of the same charge and thus there is also a charge stabilisation acting to prevent coagulation. Electrostatically and/or sterically stabilised latices normally have an overall negative charge although positively charged latices are known. Although latices are widely used in industry, they can be unsatisfactory in that the surfactant is normally charged and can often be preferentially absorbed onto a surface or can compete for charged particles on a surface with the latex particles.

The other major form of latices are the so-called surfactant free latices which may in fact contain a quantity of surfactant stabilised latex and in this case the main mechanism for stabilisation lies in the repulsion because of the similar charges on the various particles. These latices have conventionally had an overall negative charge although positively charged latices are known. To the best of our knowledge, there has been no disclosure in the literature of amphoteric latices and certainly we know of no disclosure of surfactant free amphoteric latices.

It is a principal object of the present invention to provide latices which minimise or overcome the disadvantages of previously known latices.

The invention includes an amphoteric latex characterised in being formed by co-polymerising monomeric polymerisable compounds including a base monomer and two further monomers one including an amine group ($R_3NH^+$) and the other a carboxyl group (RCOOH) by the use of a polymerisation catalyst, the latex having ionisable amine and carboxyl groups on the surfaces thereof.

Preferably the polymerisable monomers including an amine group is selected from:-

POLYMERISABLE AMINO COMPOUNDS

t-Butylaminoethyl Acrylate

"          Methacrylate

N,N-Diethylaminoethyl Acrylate

N,N-Diethylaminoethyl Methacrylate

"                          Methacrylamide

N,N-Dimethylaminoethyl Acrylamide

"                          Methacrylate

"                          Vinyl Ether

Allyamine

The monomer containing the carboxyl group may be selected from:-

CARBOXYLIC ACID MONOMERS

Methacrylic Acid Acrylic Acid Itaconic Acid

Fumaric Acid

Glutaric Acid Crotonic Acid Citraconic Acid

In one aspect of the invention the latices may be formed using a styrene monomer as the base monomer but, alternatively, they may be formed using other monomers such as methyl methacrylate, ethyl acrylate, vinyl acetate, vinyl chloride, vinylidene chloride and certain mixtures of these and other monomers, for example a mixture of styrene and butadiene monomers.

In much of our experimental work the amine used was N,N-Diethylaminoethyl methacrylate and the carboxyl was methacrylic acid. The polymerisation catalyst can satisfactorily be potassium persulphate. Alternatively, other initiators, including γ-radiation can equally well be used. We have found that the optimum pH for minimum coagulation is pH 1.2.

We have found that the particle size of the latex can be controlled by controlling the concentration of monomers in the solution.

Latices which have the same properties, particularly iso-electric point and surface charge but which are of different sizes can be made. It is necessary to increase the concentration of the monomers in the solution with a further increase in the proportion of monomers which have functional groups to compensate for the increase in surface area to maintain a required charge density.

Latices made in accordance with the invention can be of one of two forms, either hard latices or soft latices. Hard latices are used for a number of applications, particularly in coating fine papers and in certain medical applications where they can be carriers for radioactive isotopes and, because of the differences in cell structures, so the isotopes can selectively be delivered to such areas. Once delivered a scan or the like can be made and the distribution of the isotopes determined.

Soft latices are used in paints and when the paint is drying the latices tend to form a hard transparent film incorporating pigment and filler, thereby providing the outer surface of the paint. In many applications the latices are to be placed on a surface which is negatively charged and it has often been necessary to use an intermediate so that the latex is not repelled by the material on which it has been located.

5

Using latices made in accordance with the invention adjustment of the pH can cause variations in the surface charge and the latex may selectively exhibit positive or negative characteristics depending on which side of the iso-electric point it is located at the particular pH value. The actual iso-electric point can be varied by variation of the proportion of carboxyl to amine and thus where one is constrained to operate at a certain pH the surface charge of the latices can still, within limits, be controlled. In the formation of the latex conditions are selected so that one of the functional groups, the amine or the carboxyl acid is deactivated so the growing particles all exhibit the same charge and, as such tend to repel so that there is little coagulation during growth. At the end of polymerisation, by altering the conditions, the deactivated functional group can be reactivated and the required properties of the latex are revealed.

We shall describe one method of making the latices of the invention, together with the various properties of the latices in relation to the accompanying drawings in which:-

Fig. 1 shows the electrophoretic mobility of latices as a function of pH at $10^{-2}$ ionic strength. The latices were prepared with various molar ratios of acid to amine (R).

Fig. 2 shows the electrophoretic mobility of latex B as a function of pH and conditioning at pH3 (⊘), pH6.3 (O) and pH10.3 (▢). Ionic strength is fixed by $5 \times 10^{-2}$M NaCl.

Fig. 3 shows the zeta potential of latex B as a

6

function of pH at various constant ionic strengths.

Fig. 4 illustrates the conductometric and potentiometric titration of amphoteric latex B (R = 1.09) with excess added HCl by base KOH.

Fig. 5 illustrates the variation of surface charge on the amphoteric polystyrene latex as function of pH. The $pH_{pzc}$ is assumed to be the $pH_{iep}$.

In making the latex we treated the components as follows:-

The styrene monomer used was purified by vacuum distillation at a temperature of about $35^{\circ}C$ and under reduced pressure.

The amine used was N,N-Diethylaminoethyl methacrylate (DEAM molec.wt. = 185) and was vacuum distilled at $80^{\circ}C$ at 10 mm Hg. The carboxyl was methacrylic acid (MA molec.wt. = 86) and this was shaken with sodium chloride, the aqueous layer separated and the acid dehydrated over calcium chloride. It was then vacuum distilled ($73^{\circ}C$ at 20 mm) under nitrogen. All purified monomers were stored at $0^{\circ}C$.

Potassium persulphate (KPS) was used as the polymerisation catalyst and was of an analytical grade, it was used without further purification.

Water used was triply distilled from an all-Pyrex apparatus.

Preparation of amphoteric latices

The basic recipe used consisted of :-

| | |
|---------|----------------------|
| Styrene | $10 \text{ cm}^3$ |
| DEAM | $1$ g |
| MA | $0.5$ g |
| KPS | $0.2$ g |
| Water | $100 \text{ cm}^3$ |

Prior to mixing the reactants, the pH of a mixture of DEAM, MA and water was adjusted to the desired value selected, as will be described hereinafter, as 1.2 with concentrated HCl.

The materials were poured into a 273 cc capacity container purged with nitrogen (~ 10 min) sealed and tumbled end-over-end (~ 50 rpm) in a water bath at 70°C for a specified time. At the end of the reaction time the latex was decanted through a filter packed with glass wool in order to remove any coagulum formed.

Alternatively, any other form of mixing vessel in which an inert atmosphere can be maintained can be used.

Purification

After the polymerisation, the latex suspension contained (in addition to copolymerised amine and carboxylate groups) some potassium sulphate, sulphuric acid, hydrochloric acid, unreacted monomer, and possibly some soluble copolymers. The latex was dialysed against distilled water, using well-boiled Visking dialysis tubing, until the specific conductivity of the diaylsate was lower then $2 \times 10^{-6}$ mho cm$^{-3}$; thus usually required about 10 changes of water over a period of two weeks. The ratio of dialysate to latex used was

8

-50 to 1.

In order to ascertain both quantitatively and qualitatively that the dialysis efficiently removed all soluble components, the latex particles were sedimented by centrifugation at $2.5 \times 10^4 g$ for one hour. The supernatant was then discarded and the latex cake was redispersed with slightly acidified distilled water (pH3). This procedure was repeated 10 times.

The latices purified by these methods, i.e. dialysis and centrifugation, were subsequently compared by measuring the electrophoretic mobility at various pHs. No significant differences between the samples were noted, thus suggesting that the charge groups are integral parts of the surface.

Particle size determination

Electron microscopy was used to determine both particle diameters and size uniformity. Copper grids of 300 mesh were covered with a film of Formvar and a light carbon layer was deposited by vacuum evaporation. Grids were dipped into a dilute latex suspension and allowed to dry. The electron microscope used was a HS-9 (Hitachi Ltd.). Particle diameters were measured on the negatives using a magnifying glass. In order to calibrate the electron microscope a micrograph of a carbon replica (2160 lines/mm) was taken at the same magnification as that used to examine the latex particles. In order to compare the degree of uniformity of the latex particles it is desirable to have a single number that may be defined as the uniformity ratio U.

9

Where $U = \bar{D}_W/\bar{D}_N$

$\bar{D}_W$, the weight average diameter of $n_i$ particles is

$$\bar{D}_W = \{(\Sigma_i n_i D_i^6)\ (\Sigma_i n_i D_i^3)\}^{\frac{1}{3}}$$

and $\bar{D}_N$, the number average diameter, is

$$\bar{D}_N = (\Sigma_i n_i D_i)/(\Sigma_i n_i)$$

We consider that latices having $U < 1.01$ are monodisperse (that is having a uniform particle size), but in many cases a uniformity ratio which is higher than this would be satisfactory.

## Electrophoresis

The electrophoretic mobilities of the latices were measured by the microelectrophoretic technique. The apparatus employed is manufactured by Rank Bros. The mobility values were converted into zeta potentials, following the known Wiersema et al treatment.

## Titration of surface groups

### Equipment

The pH was measured using a combined glass-calomel electrode and a Radiometer (Copenhagen) pM 26 meter. The electrodes were calibrated with Merck Titrisol buffer solutions of pH $4.00 \pm 0.02$ and $9.00 \pm 0.02$ at $20^\circ$C. The conductance was measured by a Wayne-Kerr conductance bridge assembly. The titrations were carried out on 100 $cm^3$ diluted samples of purified latex in a thermostatted glass container at $20^\circ$C. The latex was stirred with a magnetic stirrer and carbon dioxide was excluded by passing a stream of nitrogen over the latex surface. The titration cell had a tight-fitting cap with sockets to accept the ground glass cones on the combined electrode, the conductivity cell, the micrometer syringe tip and nitrogen inlet.

## Conductometric and potentiometric titration

A weighed amount of latex (~1 g) was diluted to 100 $cm^3$ with distilled water in a thermostatted glass container. Both sets of electrodes of the pH meter and the conductance bridge were placed in the diluted latex dispersion. Mechanical stirring of the latex was started and the pH of the latex sample was adjusted to a pH of 2.5 ± 0.1 with dilute HCl solution. The sample was then titrated with standard 1 N/1 KOH in 0.02 ml increments by means of a micrometer syringe fitted with a glass needle.

Both conductance and pH were studied as a function of volume of standard base consumed until a pH of about 11 was reached.

Following the procedures set out hereinbefore we obtained the following results.

(a) Stability and uniformity of latex

During the initial preparative stages of polymerisation it was found that pH was a critical influence on the stability and particle uniformity of the latex. Consequently, pH was varied to optimise the preparation with respect to stability and particle size.

The effect of changing pH over the range of 1 to 3.9 on the monodispersity ($\bar{D}_W/\bar{D}_N$) and stability (% coagulum) was examined at constant composition of reactants, temperature and time. The polymerisation time was set at 24 hours to assure a conversion close to 100%.

The data shown in Table 1, indicates a decrease in the stability and monodispersity with pH increase in excess of 1.2.

Table 1    Effect of pH stability and uniformity of amphoteric polystyrene particles

| Sample | pH | % coagulum | $\bar{D}_W/\bar{D}_N$ |
|--------|-----|-----------|------------------------|
| A | 1.0 | 9.3 | 1.007 |
| B | 1.2 | 4.2 | 1.003 |
| C | 2.0 | 21.3 | 1.019 |
| D | 3.0 | 33.0 | 1.110 |
| E | 3.9 | 38.1 | 1.250 |

The trend parallels an increase in the degree of ionisation of methacrylic acid with pH that subsequently results in a decrease in the net positive charge. This apparently effects the stability of the system and also monodispersity by permitting homocoagulation of particles as the charge on the particles is not sufficient to keep these separate. Lower stability, at pH 1.0, may be attributed to the increase in ionic strength of the medium. The latex suspension B, prepared at pH 1.2, has an excellent stability, with the exception of the pH region near the iso-electric point, and consists of highly monodisperse particles with the average diameter of 185 nm. Samples A, C, D and E varied in a degree of uniformity, as shown in the last column of Table 1; however, no significant deviations from the average particle size of the latex B were noted.

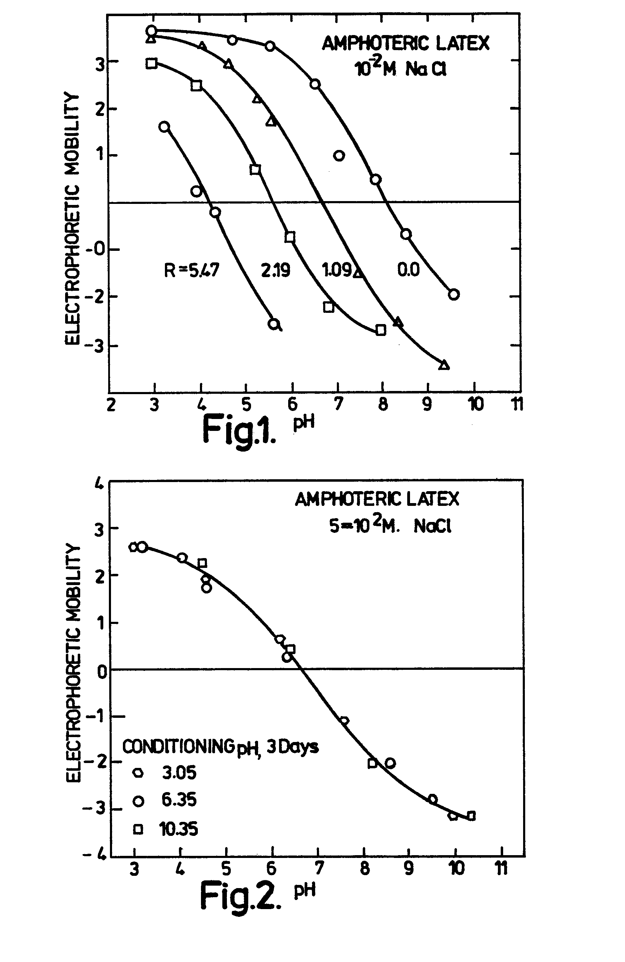

An attempt was also made to prepare an amphoteric -latex under conditions having a higher pH but with a larger ratio of the methacrylic acid to the amine than used in the basic recipe. The pH was adjusted to 6.5 with a phosphate buffer (final concentration 0.02 M) and the content of DEAM was reduced to 0.2 g. The produced material showed good monodispersity (U = 1.005) with an average particle size of 504 nm. However, the stability was poorer than that of the latex B. The iso-electric point was determined using the microelectrophoretic technique to be at pH 4.6, and the electrophoretic mobility vs pH dependence is shown in Fig. 1.

(b) Control of iso-electric point and zero-point-of-charge

In the next stage, an attempt was made to produce an amphoteric latex characterised by different iso-electric point. Polymerisations were carried out with the various amine to methacrylic acid combinations in the same manner as for the case of latex B preparation.

Firstly, the acid content was kept constant, at 0.5 g, and the quantity of amine was varied. The results are shown in Table 2.

Table 2 Effect of amine content on stability and uniformity of polymer particles

| Sample | Amine (g) | % coagulum | $\bar{D}_w/\bar{D}_n$ |
|--------|-----------|------------|-----------------------|
| F | 1.0 | 4.6 | 1.003 |
| G | 0.5 | 48.0 | 1.230 |
| H | 0.1 | 100.0 | - |

Thus it appears that, similarly to the effect of pH, a decrease in the net positive charge due to the decrease in the number of aminium groups yields a poor stability and low uniformity.

In order to stabilise the system adequately, the level of amine was set at 1.0 g and the molar ratio of acid to amine was increased approximately from zero to 2. The results are listed in Table 3.

Table 3    Effect of methacrylic acid content on the iso-electric point and uniformity of polymer particles

| Sample | MA (g) | iep (pH) | $\bar{D}_w/\bar{D}_n$ |
|--------|--------|----------|-----------------------|
| I | 0.0 | 8.5 | 1.010 |
| J | 0.5 | 6.7 | 1.003 |
| K | 1.0 | 5.5 | 1.021 |

Predictably, the location of the iso-electric point shifted toward the higher pH (Fig. 1) as the acid/amine ratio was decreased. The average particle size (185 nm) was found to remain basically unchanged although monodispersity was affected and was the highest for equimolar acid and amine monomers, (J).

(c) Chemical stability of surface groups

It has been reported that where pure amine is used it is found to be prone to rapid hydrolysis at high pH values. No evidence though is available on the rate of hydrolysis of amine polymer or amine/acid copolymer.

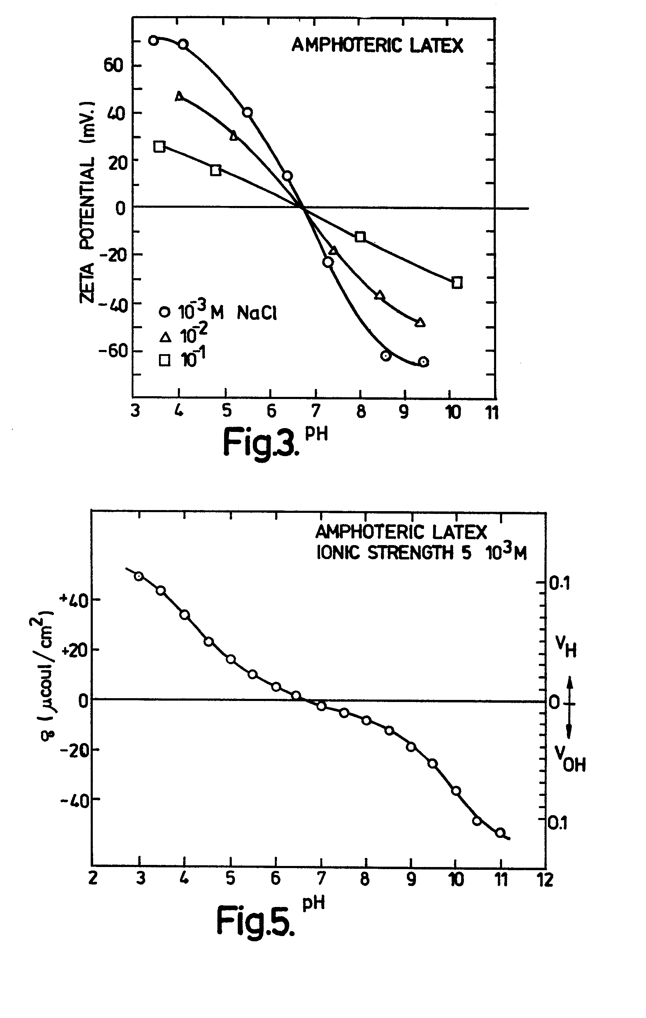

In an attempt to assess the effect of pH on hydrolysis of amine surface groups, the following conditioning experiment was carried out. Dilute (0.01 % w/v) samples of latex, in $5 \times 10^{-2}$ mol NaCl, were adjusted to a desired pH and allowed to equilibrate in a shaking water bath (25°C) for about 72 hours before making measurements. At the end of this time, the pH was measured again and the zeta potential was determined. The data shown in Fig. 2 strongly suggest that amine groups, at least under the conditions of the experiment, are resistant to hydrolysis, since the electrophoretic mobility depends only on the pH and not on the ageing under different conditions used. Further substantiation for this conclusion has been obtained from an examination of the effect of salt concentration on the zeta potential of particles. The results are summarised in Fig. 3. The iso-electric point, as indicated by the reversal of sign, occurs at pH 6.7, in good agreement with the value estimated from the conditioning experiment. The location of the iso-electric point is unaffected by the salt concentration thus supplying an additional proof of a covalent nature of bonding on the surface groups to the interface.

### Characterisation of Amphoteric Latex

#### (a) Electrokinetic behaviour of amphoteric latex

The electrophoretic mobility of latex B was measured in various constant ionic strength solutions, i.e. $10^{-3}$, $10^{-2}$ and $10^{-1}$ mol dm$^{-3}$ NaCl, as a function of pH. The electrophoretic mobility was converted to zeta potential using interpolation of the graphical results published by Wiersma et al for particle radius a = 185 nm and the Debye-Huckel parameter $K = 0.329 \times 10^{10} \sqrt{C_{NaCl}} m^{-1}$, giving Ka as 190, 60 and 19. The results are shown in Fig. 3. The iso-electric point is located at the mutual intersection of the three $\xi$-pH curves and the $\xi = 0$ axis at pH 6.7 ± 0.1. The zeta potential-pH values are fairly symmetrical about the $pH_{iep}$, suggesting similar magnitude of surface charge on the cationic and anionic surfaces. The data shown in Fig. 2 at $5 \times 10^{-2}$ mol $dm^{-3}$ NaCl show the same $pH_{iep}$ and the magnitude of the zeta potential lies between the values at $10^{-2}$ and $10^{-1}$ mol $dm^{-3}$ NaCl. It is interesting to note that latex, in the pH range 6-7.5, coagulated readily but it was subsequently redispersed fully when pH was changed to lower or higher values. Also, a sample of latex left coagulated for several days showed the same trend. This may well be because of a very high charge residing on the particle surface.

(b) <u>Conducometric and potentiometric titration</u>

Much of our knowledge of ionogenic polymer latices has been based on experimental observation of electrokinetic potentials and total charge by conductometric titration as used, for example, by Vanderhoff and Van den Hul. Recently, increased emphasis has been placed on potentiometric titration of the surface charge to assess the effects of pH and ionic strength on the surface charge.

Commonly the functional groups responsible for the surface charge are sulphate and carboxylate. Organic sulphates approximate strong acid behaviour with intrinsic acidity constants characterised by $pK_a$ ~2. Latices with sulphate surface groups are essentially completely ionised

16

in slightly acidic and neutral solutions.   In this case, conductometric titration is more satisfactory than potentiometric titration as potentiometric titration endpoint is rather difficult to detect with high accuracy.   Latices with carboxylate surface groups may be usefully characterised by both conductometric and potentiometric titration.   The methods are really complementary.   The conductometric titration endpoints indicate the amounts of excess strong acid or base and the total surface charge without detailing the pH dependence of the surface charge or the surface dissociation constants.   If the endpoints are known from either conductometric or potentiometric titration, then the potentiometric titration yields information on the fractional ionisation and dissociation constants as a function of pH. Where conductometric titration is not carried out simultaneously, the endpoints may be found using Gran's method.

In the case of amphoteric latices with different surface groups, neither of these techniques alone is capable of yielding sufficient information about the sign and magnitude of the surface charge.

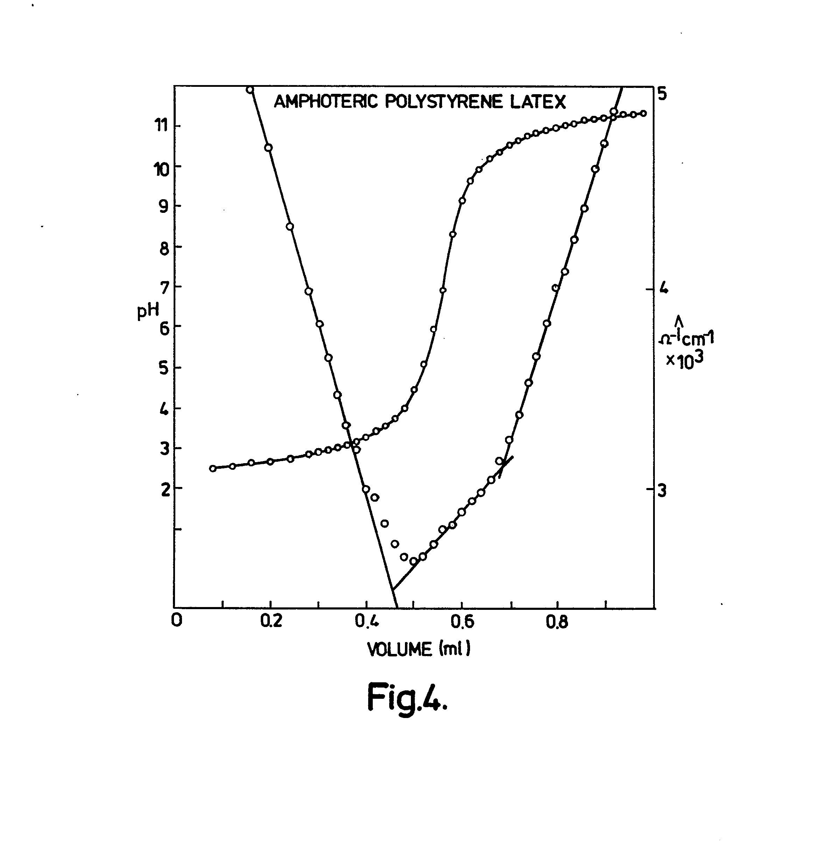

The titration data for amphoteric latex B are shown in Fig. 4.   As in the case of the copolymer, the cationic and anionic sites are not distinguished by endpoints in the conductometric titration.   Two endpoints are observed, at 0.460 and 0.680 ml corresponding to the titration of excess strong mineral acid and then the total ionisable protons from weak acid groups.   Further addition of strong base serves merely to increase the $OH^-$ concentration and the conductance increases more rapidly.   The conductometric titrations give no clue as to the relative amounts of $-RCOOH$ and $-R_3NH^+$ groups. The total number of ionisable surface sites is given by $0.220 \times 10^{-3}$ moles/0.8277 g of latex. Using the specific surface area 30.9 $m^2$/g this corresponds to 83.2 $\mu Coul/cm^2$ of protonic charge.

The potentiometric titration shows only one clear inflexion at about .56 ml and pH 6.8. If, however, Gran's method is applied to the pH-volume results, endpoints are obtained at 0.464 and 0.670 ml in reasonable agreement with the conductometric results. On the other hand, when Gran linearisation plots are attempted for data points between the excess strong acid and excess strong base endpoints, the Gran functions are non-linear with volume. Thus, the endpoint for the titration of carboxylic acid groups alone cannot be determined.

However, from independent electrophoretic mobility of zeta potential measurements as a function of pH at various constant ionic strengths, the iso-electric point, $pH_{iep}$, has been established at $pH_{iep} = 6.7 \pm 0.1$. In the absence of specific adsorption of anions or cations this also corresponds to the point-of-zero-change, $pH_{pzc}$. At these conditions, the number of ionised $RCOO^-$ groups is equal to the number of $-R_3NH^+$ groups. Hence we may use this data to locate the endpoint at pH 6.7 and 0.555 ml, in close agreement with the main inflexion in the titration curve. Taking the difference between the conductometric endpoints and the iso-electric endpoint yields the maximum number of positive and negative sites. These correspond to values +40 and -43 $\mu Coul/cm^2$ at pH 3.7 and pH 10.4 respectively. Using the potentiometric titration the magnitude of the surface charge shown in Fig. 5 appears to be slightly greater than the result from the conductometric titration. This may be due to the error in endpoint determination in both methods. For example, in the determination of the charge from the difference between blank and latex titrations, errors tend to become larger at high and low pH where $OH^-$ and $H^+$ have significant buffer capacity compared to surface charge.

In comparison to previously prepared polystyrene latices this latex is unique in two respects, (1) the sign of the surface charge is controlled by pH, and (2) the magnitude of the charge that can be developed, ca±40 $\mu C/cm^2$, is higher than negatively charged surfactant free sulphonated or carboxylate latices.

This latex also has the unusual property that it is easily redispersed after coagulation by simply altering the solution pH so as to charge the surface. The high magnitude of the charge and consequently high surface potential must cause sufficient electrostatic repulsion to overcome the van der Waals attractive forces.

1

Claims:

1.      An amphoteric latex characterised in being formed by co-polymerising monomeric polymerisable compounds including a base monomer and two further monomers one including an amine group ($R_3NH^+$) and the other a carboxyl group (RCOOH) by the use of a polymerisation catalyst, the latex having ionisable amine and carboxyl groups on the surfaces thereof.

2.      An amphoteric latex as claimed in claim 1 wherein the monomer including the amine group is selected from the group comprising, t-Butylaminoethyl Acrylate, t-Butylaminoethyl Methacrylate, N,N-Diethylaminoethyl Acrylate, N,N-Diethylaminoethyl Methacrylate, N,N-Diethylaminoethyl Methacrylamide, N,N-Dimethylaminoethyl Acrylamide, N,N-Dimethylaminoethyl Methacrylate, N,N-Dimethylaminoethyl Vinyl Ether and Allyamine.

3.      An amphoteric latex as claimed in claim 1 wherein the monomer including the carboxyl group is selected from the group comprising Methacrylic Acid, Acrylic Acid, Itaconic Acid, Fumaric Acid, Glutaric Acid, Crotonic Acid and Citraconic Acid.

4.      An amphoteric latex wherein the base monomer is selected from the group comprising styrene, methyl methacrylate, ethyl acrylate, vinyl acetate, vinyl chloride, vinylidene chloride, mixtures of these and other monomers.

5.      An amphoteric latex as claimed in claim 1 wherein the base monomer is styrene, the monomer including an amine group is N,N-Diethylaminoethyl methacrylate and the monomer including a carboxyl group is Methacrylic Acid.

2

6.     An amphoteric latex as claimed in claim 1 wherein the latex coagulates readily in a restricted pH range but redisperses when the pH is changed to be outside the range.

7.     An amphoteric latex as claimed in claim 6 where coagulation occurs in the pH range 6 to 7.5.

8.     A method of making an amphoetric latex comprising mixing a base monomer with two further monomers one including an amine group, the other a carboxyl group, with water, adjusting the pH of the mixture, adding a base monomer, and a polymerisation catalyst, permitting polymerisation to take place, filtering the latex to remove coagulum and dialysing the latex against distilled water.

9.     A method as claimed in claim 8 wherein the base monomer is selected from the group comprising styrene, methyl methacrylate, ethyl acrylate, vinyl acetate, vinyl chloride, vinylidene chloride, mixtures of these and other monomers, the monomer including the amine group being selected fromthe group comprising t-Butylaminoethyl Acrylate, t-Butylaminoethyl Methacrylate, N,N-Diethylaminoethyl Acrylate, N,N-Diethylaminoethyl Methacrylate, N,N-Diethylaminoethyl Methacrylamide, N,N-Dimethylaminoethyl Acrylamide, N,N-Dimethylaminoethyl Methacrylate, N,N-Dimethylaminoethyl Vinyl Ether and Allyamine, the monomer including the carboxyl group being selected from the group comprising Methacrylic Acid, Acrylic Acid, Itaconic Acid, Fumaris Acid, Glutaric Acid, Crotonic Acid and Citraconic Acid, the pH being adjusted to 1.2 with concentrated acid.

10.     A method as claimed in claim 9 wherein the polymerisation catalyst is selected from the group comprising potassium persulphate and γ-radiation.

0000426

1/3

Fig.1. pH

Fig.2. pH

Fig.3.

Fig.5.

Fig.4.

0000426

European Patent Office

EUROPEAN SEARCH REPORT

Application number

EP 78 30 0090

## DOCUMENTS CONSIDERED TO BE RELEVANT

| Category | Citation of document with indication, where appropriate, of relevant passages | Relevant to claim |
|---|---|---|
| X | US - A - 3 404 114 (W.C.SNIJDER a.o.) <br> * Claim 1 * | 1-6,8-10 |
| A | GB - A - 1 407 116 (COMMONWEALTH SCIENTIFIC & INDUSTRIAL RESEARCH ORGANISATION) | |
| A | FR - A - 2 182 060 (BASF) | |
| A | FR - A - 2 186 497 (I.C.I. AUSTRALIA Ltd.) | |

### CLASSIFICATION OF THE APPLICATION (Int. Cl.²)

C 08 F 246/00
C 08 F 220/04
C 08 F 220/34

### TECHNICAL FIELDS SEARCHED (Int.Cl.²)

C 08 F 246/00
C 08 F 220/10-
C 08 F 220/12
C 08 F 220/06
C 08 F 220/34

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 29-09-1978 | CAUWENBERG |

EPO Form 1503.1 06.78